## Europäisches Patentamt
## European Patent Office
## Office européen des brevets

(11) Veröffentlichungsnummer: **0 248 322 B1**

# EUROPÄISCHE PATENTSCHRIFT

(45) Veröffentlichungstag der Patentschrift: **22.05.91**

(51) Int. Cl.⁵: **B60P 3/00**, F41H 7/00, G21F 7/02

(21) Anmeldenummer: **87107611.3**

(22) Anmeldetag: **25.05.87**

(54) **Fahrzeug für Katastrophenschutz, insbesondere in kerntechnischen Anlagen.**

(30) Priorität: 05.06.86 DE 3618885

(43) Veröffentlichungstag der Anmeldung:
09.12.87 Patentblatt 87/50

(45) Bekanntmachung des Hinweises auf die Patenterteilung:
22.05.91 Patentblatt 91/21

(84) Benannte Vertragsstaaten:
AT BE CH DE ES FR GB IT LI NL SE

(56) Entgegenhaltungen:
EP-A- 0 222 518          CH-A- 443 020
DE-A- 1 907 050          DE-A- 2 231 057
DE-A- 3 023 050          DE-A- 3 302 771

(73) Patentinhaber: **IBP Pietzsch GmbH**
**Hertzstrasse 32-34**
**W-7505 Ettlingen(DE)**

Patentinhaber: **MaK System Gesellschaft mbH**
**Falckensteiner Strasse 2**
**W-2300 Kiel 17(DE)**

(72) Erfinder: **Pietzch, Ludwig, Dr.-Ing.**
**Im Rosengärtle 14**
**W-7500 Karlsruhe 41(DE)**
Erfinder: **Kauer, Harald, Dr.-Ing.**
**Schauinslandstrasse 6**
**W-7505 Ettlingen 6(DE)**

(74) Vertreter: **Hansmann, Dierk, Dipl.-Ing.**
**Jessenstrasse 4**
**W-2000 Hamburg 50(DE)**

**Beschreibung**

Die Erfindung betrifft ein Fahrzeug für Katastrophenschutz, insbesondere in kerntechnischen Anlagen, mit einem geländegängigen, selbstfahrenden Fahrwerk.

Es ist bekannt, in kerntechnischen Anlagen derartige unbemannte, ferngelenkte Fahrzeuge kleinerer Ausmaße in einem einer Strahlung ausgesetzten Bereich einzusetzen (DE-A-2231057). In einem Störfall ermöglichen solche Fahrzeuge jedoch nicht die Beobachtung und das Eingreifen mithilfe von Bedienungspersonal vor Ort, weil solche Fahrzeuge nicht dazu in der Lage sind, Bedienungspersonal strahlengeschützt zu befördern bzw. schweres Gerät mit ausreichendem Aktionsradius in einer strahlenverseuchten Zone zu bewegen.

Der Erfindung liegt die Aufgabe zugrunde, eine Fahrzeugfamilie zu schaffen, die eine wirksame Hilfe und Beseitigung der Folgen von Störfällen bzw. Katastrophen, insbesondere in kerntechnischen Anlagen, unter Führung von Personal ermöglicht.

Zur Lösung dieser Aufgabe sind die Merkmale des Anspruchs 1 vorgesehen.

Mit der Erfindung wird ein mobiler Hilfszug geschaffen, der ein bemanntes Führungsfahrzeug mit Schutz gegen gesundheitsschädliche Einwirkungen von außen und andererseits unbemannte Arbeitsfahrzeuge umfaßt, die große Lasten tragen können, fernsteuerbar sind, einen ausreichenden Aktionsradius haben und von dem Führungsfahrzeug vor Ort, d. h. in einer chemisch oder durch Strahlung verseuchten Umgebung, wirksam geführt werden können.

Vorzugsweise wird als Chassis eine Panzerwanne und als Fahrwerk ein Kettenfahrwerk verwendet, wie es bei der üblichen Panzerproduktion anfällt. Auch der zugehörige Antrieb kann ein Panzerantrieb, nämlich ein Dieselmotor oder eine Gasturbine, sein.

Ein derartiger Fahrzeugunterbau ermöglicht es, große Lasten in schwierigen Geländen mit einem großen Aktionsradius zu transportieren.

Soll das Fahrzeug bemannt werden, so wird als Einsatzd ein mit einer Strahlenschutzhülle und einem Mantel aus Blei und Kunststoff versehener Personen-Container verwendet. Eine strahlengeschützte Direktbeobachtung im Maßstab l:l ist durch in diese Strahlenschutzhülle eingebrachte Sichtfenster aus Bleiglas möglich. Neben einer Direktsicht ist eine Beobachtung des Umfelds auch in verschiedenen Vergrößerungen über ein zusätzliches Beobachtungsgerät möglich, wobei auch ein überlagerbares IR-Bild vorgesehen sein kann.

Ein bemanntes Fahrzeug nach der Erfindung kann als Führungsfahrzeug für andere, drahtlos fernsteuerbare Fahrzeuge der gleichen Familie dienen, die Arbeitsgeräte wie einen teleskopierbaren Kraftmanipulator oder Kran, ein Spritzaggregat zum Bekämpfen von Bränden oder dgl. als Einsatz tragen.

Der Einsatz kann wie der Drehturm eines Panzers drehbar in der Ausnehmung gelagert sein.

Das beschriebene Führungsfahrzeug kann auch einen Generator enthalten, über den Untersysteme, wie außerhalb des Führungsfahrzeuges angeordnete Roboterfahrzeuge über Kabel mit Energie versorgt werden können.

Die mit Arbeitsgeräten versehenen unbemannten Fahrzeuge der Fahrzeugfamilie lassen sich sämtlich drahtlos fernsteuern. Ein solches unbemanntes Fahrzeug läßt sich auch zu Beobachtungszwecken einsetzen, wobei dann zweckmäßig eine elevierbare Beobachtungsplattform mit darauf angebrachtem Beobachtungsgerät vorgesehen ist. Beispielsweise kann ein solches Fahrzeug ein multispektrales TV-Bild zu dem Führungsfahrzeug oder zu einer ortsfesten Zentrale liefern.

Das unbemannte Fahrzeug kann auch als Zugfahrzeug mit automatischer Anhängevorrichtung ausgebildet sein, so daß das Fahrzeug schwere oder voluminöse Lasten transportieren kann. Schließlich kann an dem Fahrzeug als Arbeitsgerät ach eine Räumschaufel angebracht sein, die in Verbindung mit der guten Geländegängigkeit Aufräumarbeiten ermöglicht.

Die Erfindung ist im folgenden anhand schematischer Zeichnungen an Ausführungsbeispielen mit weiteren Einzelheiten näher erläutert. Es zeigen:

Fig. I      eine auseinandergezogene Darstellung eines Fahrzeuges gemäß der Erfindung mit einer auf einem Kettenfahrwerk fahrbaren Panzerwanne und zwei auswechselbaren Einsätzen;

Fig. 2      ein bemanntes Führungsfahrzeug in einer Frontansicht und zwei Schnittansichten von der Seite und von oben;

Fig. 3      ein unbemanntes Fahrzeug der Fahrzeugfamilie mit einem teleskopierbaren Kraftmanipulator in verschiedenen Arbeitsstellungen;

Fig. 4      ein unbemanntes Spritzfahrzeug;

Fig. 5      ein unbemanntes Transportfahrzeug gemäß Fig. 3 mit Kraftmanipulator und angekuppeltem Anhänger.

In Fig. I ist ganz unten ein Fahrzeugchassis 2 mit einer Panzerwanne 4 und einem Kettenfahrwerk 6 eines Panzers dargestellt. Mit 8 ist eine von oben gesehen kreisrunde Ausnehmung in der Wanne 4 bezeichnet. In dieser Ausnehmung ist wahlweise einer der beiden oberhalb gezeichneten Einsätze 10,12 einsetzbar. Der Einsatz l0 ist ein strahlengeschützter Container zum Aufnehmen von Personal l4 innerhalb einer Strahlenschutzhülle l6, die beispielsweise aus einem Verbundmaterial (Blei und Kunststoff) bestehen kann. Der Unterteil l8 des Containers l0 ist zylindrisch ausgebildet und im Azimut drehbar in der Ausnehmung 8 lagerbar. Mit 20 sind ein Frontfenster und zwei Seitenfenster aus Bleiglas bezeichnet, die dem Personal l4 eine Direktsicht seitlich und frontal nach vorne aus dem Container heraus nach außen ermöglichen.

22 ist ein optisches Beobachtungsgerät, das ein Bild beispielsweise über einem TV-Monitor in verschiedenen Vergrößerungen liefern kann. Zusätzlich kann auch ein IR-Beobachtungsgerät vorgesehen sein.

Der Einsatz l2, der für ein unbemanntes, fernsteuerbares Fahrzeug gedacht ist, und ebenso wie der Einsatz l0 drehbar in die Ausnehmung 8 paßt, hat ebenfalls ein zylindrisches Unterteil l8 und eine Plattform 24, die einen teleskopierbaren Kraftmanipulator 26 sowie ein Beobachtungsgerät 27 am Ende eines teleskopierbaren Auslegers 29 trägt.

Die Wanne 4 enthält als Antrieb einen üblichen Dieselmotor (bei 2l) und gegebenenfalls einen daran angeschlossenen Generator zur Erzeugung von elektrischer Hilfsenergie.

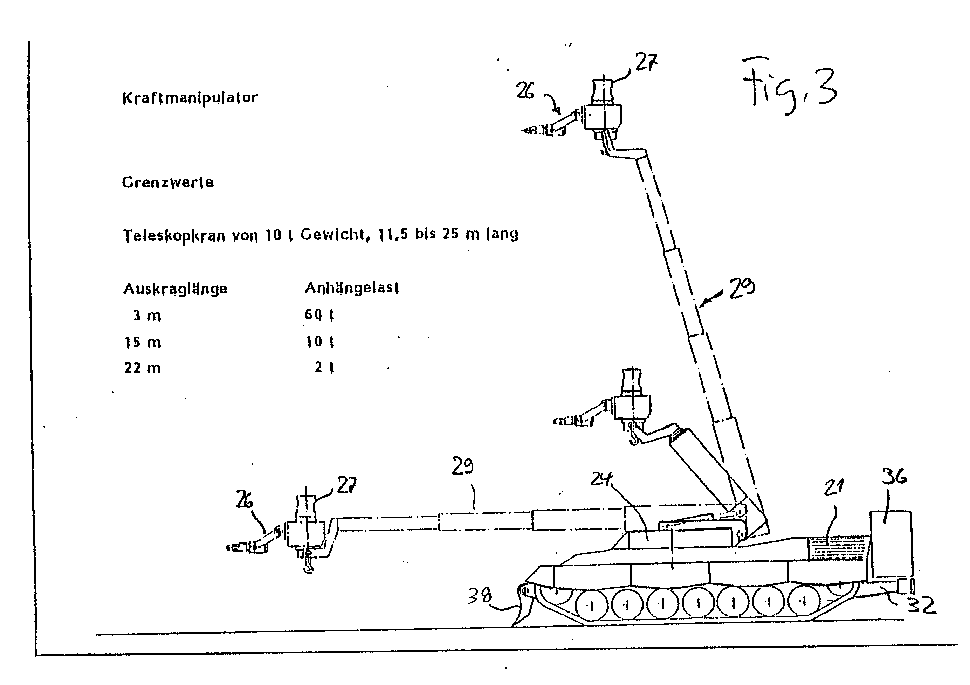

Am Bug des Fahrzeuges ist eine Räumschaufel 38 schwenkbar angelenkt, während am Heck ein Werkzeugwechsler 36 und eine Anhängerkupplung 32 vorgesehen sind. Der Werkzeugwechsler ermöglicht Ausrüstzustände des unbemannten Fahrzeugs nach Fig. 3 mit unterschiedlichstem Gerät.

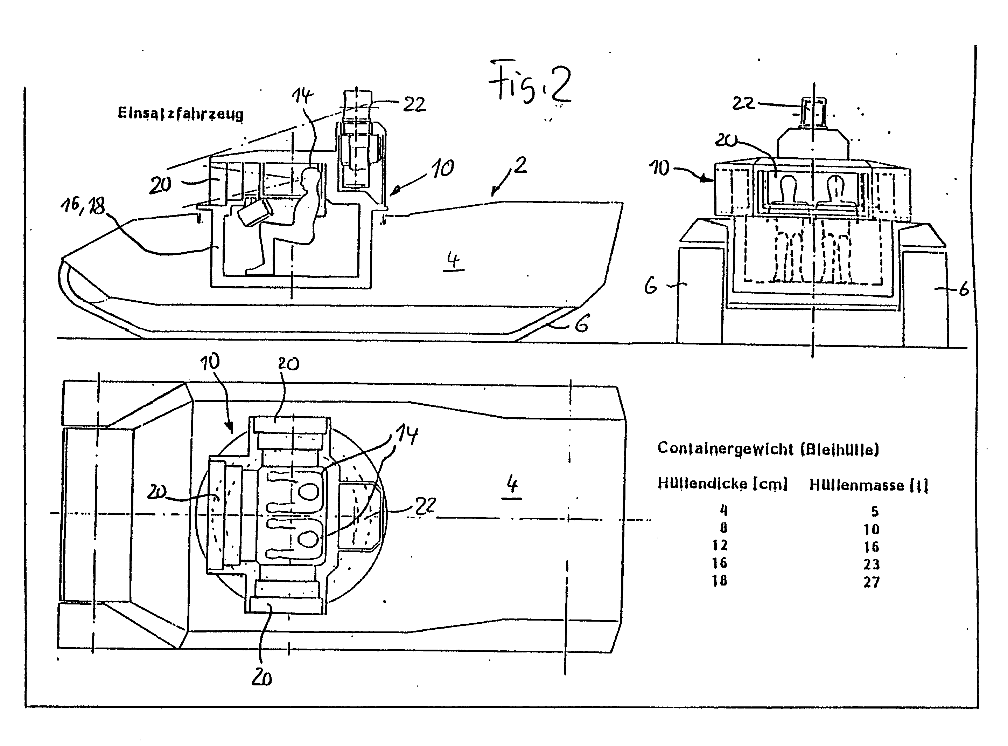

Fig. 2 zeigt den Einsatz l0 im Einbauzustand in der Wanne 4 mit Besatzung.

Fig. 3 zeigt ein unbemanntes Fahrzeug mit montiertem Einsatz l2 mit Kraftmanipulator 26, der hier in verschiedenen Betriebsstellungen gezeigt ist.

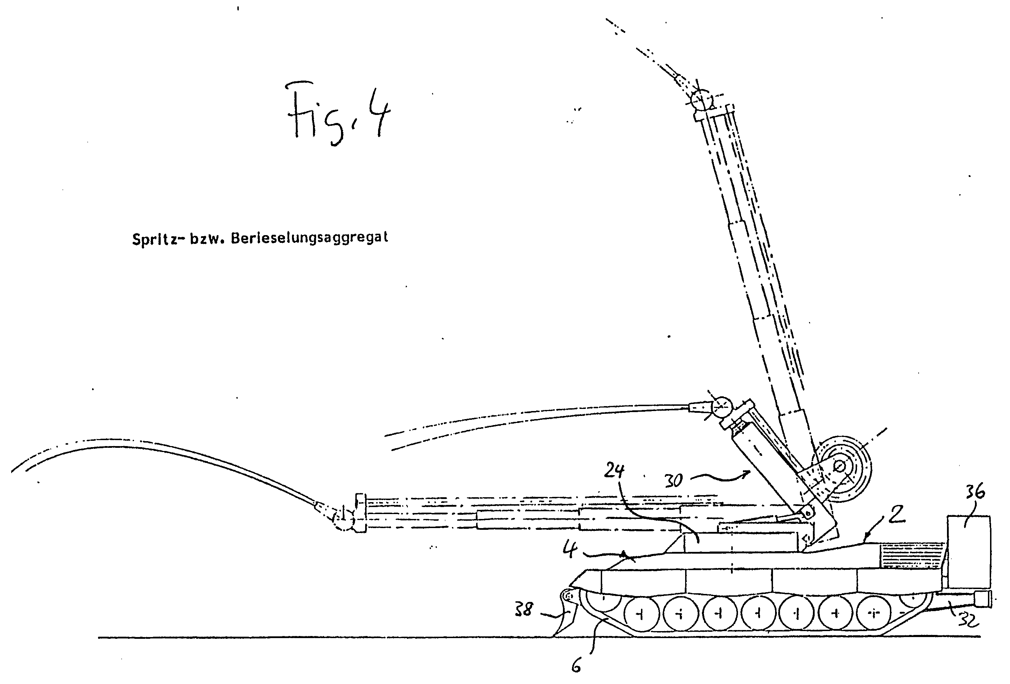

Fig. 4 zeigt ein teleskopierbares Spritzgerät 30 auf dem Einsatz l2, in verschiedenen Arbeitsstellungen.

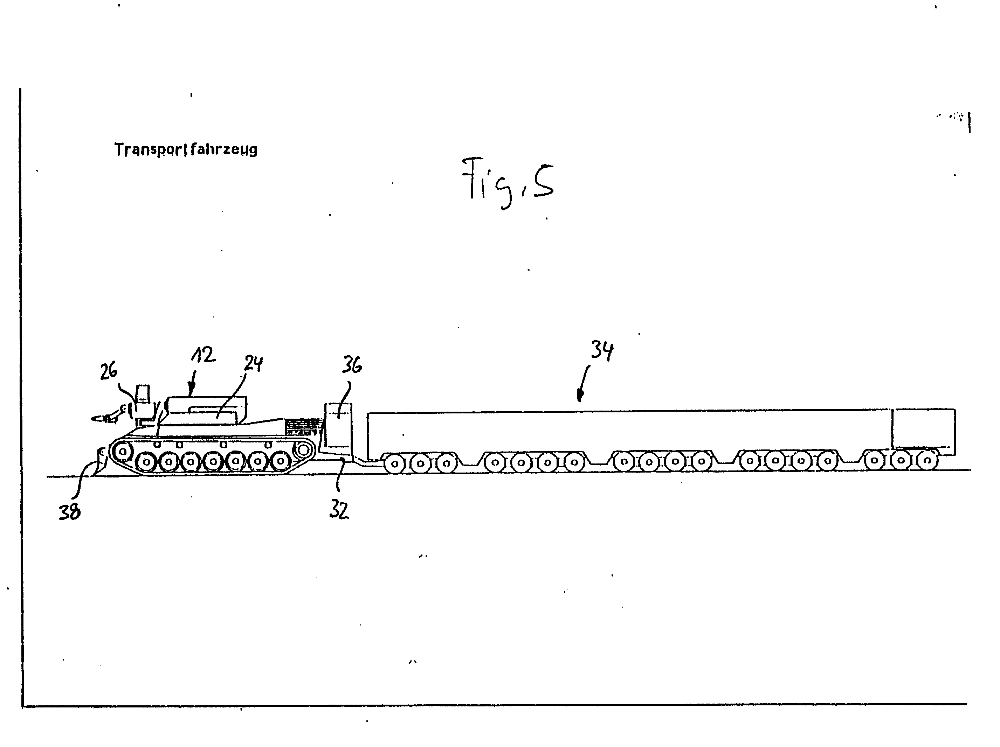

Fig. 5 zeigt das Fahrzeug nach Fig. 3 mit Einsatz l2, das gleichzeitig als Zugfahrzeug ausgebildet ist. Die Anhängerkupplung 32 dient hier zum Ziehen eines mit einer schweren oder voluminösen Last beladenen Anhängerfahrzeuges 34.

Die unbemannten Fahrzeuge nach den Fig. 3 bis 5 unterscheiden sich von dem Fahrzeug nach Fig. 2 dadurch, daß zusätzlich eine Fernsteuerung (nicht gezeigt) vorgesehen ist. Die unbemannten Fahrzeuge nach den Fig. 3 bis 5 sind mit einem Navigationssystem ausgestattet. Mithilfe einer inertialen Kreiselplattform lassen sich die einzelnen Bewegungen des unbemannten Fahrzeuges erfassen, verarbeiten und über Funk an ein bemanntes Führungsfahrzeug gemäß Fig. 2 senden. Koppelnavigation sowie Lagedarstellung in einer digitalen Karte werden somit möglich. Das multispektrale Sichtsystem mit einmischbarem IR-Bild erlaubt es, Wärmequellen zu erkennen und zuzuordnen.

Ein Entfernungsmeßgerät kann die Arbeiten mit dem Kraftmanipulator 26 nach Fig. 3 unterstützen und die Navigationsdarstellung ergänzen. Die Datenübertragung zum Einsatzfahrzeug erfolgt im GHz-Bereich. Bei Bedarf ist eine Relaisstation vorgesehen. Auf diesem Wege lassen sich Steuerinformationen mit dem bemannten Führungsfahrzeug gemäß Fig. 2 austauschen und die Navigations- und TV-Signale übermitteln.

## Ansprüche

1. Fahrzeug für Katastrophenschutz, insbesondere in kerntechnischen Anlagen, mit einem geländegängigen, selbstfahrenden Fahrwerk (6), **gekennzeichnet** durch ein für schwere Lasten konzipiertes Chassis (4) mit einer Ausnehmung (8) für einen auswechselbaren Einsatz in Gestalt eines geschützten Containers (l0) für Personal (l4) oder eines Trägers (l2) für Beobachtungsgerät (27) und/oder für Arbeitsgerät (26;30).

2. Fahrzeug nach Anspruch l, dadurch **gekennzeichnet**, daß der Container (l0) für Personal (l4) eine Strahlenschutzhülle (l6) aufweist.

3. Fahrzeug nach Anspruch 2, dadurch **gekennzeichnet**, daß in dem Container (l0) mindestens ein strahlengeschütztes Fenster (20) für Direktsicht vorgesehen ist.

4. Fahrzeug nach Anspruch 2 oder 3, dadurch **gekennzeichnet**, daß eine Vorrichtung (22) zur indirekten Beobachtung der Umgebung in dem Container (l0) vorgesehen ist.

5. Fahrzeug nach einem der Ansprüche 2 bis 4, dadurch **gekennzeichnet**, daß eine Infra-Rot-Beobachtungsvorrichtung (22) vorgesehen ist.

6. Fahrzeug nach einem der Ansprüche l bis 5, dadurch **gekennzeichnet**, daß das Chassis eine Panzerwanne (4) und das Fahrwerk ein Kettenfahrwerk (6) eines Panzers sind.

7. Fahrzeug nach einem der Ansprüche l bis 6, dadurch **gekennzeichnet**, daß als Antrieb eine Brennkraftmaschine mit angeschlossenem Generator zum Betreiben von Untersystemen, insbesondere von außerhalb des Fahrzeuges befindlichen Verbrauchern, vorgesehen ist.

8. Fahrzeug nach Anspruch l, dadurch **gekennzeichnet**, daß es drahtlos fernsteuerbar ist, insbesondere durch ein weiteres, bemanntes Fahrzeug nach einem der Ansprüche 2 bis 7, und daß der Einsatz (l2) ausschließlich als Träger für Beobachtungs- und/oder Arbeitsgerät (26,27,30), nicht aber für Personal ausgebildet ist.

9. Fahrzeug nach Anspruch 8, dadurch **gekennzeichnet**, daß das Arbeitsgerät ein teleskopierbarer Kraftmanipulator (26) ist.

10. Fahrzeug nach Anspruch 8, dadurch **gekennzeichnet**, daß das Arbeitsgerät ein Spritz-bzw. Berieselungsaggregat (30) ist.

11. Fahrzeug nach einem der Ansprüche l bis l0, **dadurch gekennzeichnet**, daß es als Zugfahrzeug ausgebildet ist.

12. Fahrzeug nach einem der Ansprüche 1 bis 11, dadurch **gekennzeichnet**, daß der Einsatz (10;12) nach Art eines Panzerturmes im Azimut drehbar in der Ausnehmung (8) gelagert ist.

13. Gerät nach einem der Ansprüche 1 bis 12, dadurch **gekennzeichnet**, daß das unbemannte Fahrzeug mittels eines Navigationssystems vom bemannten Fahrzeug aus gesteuert wird und daß die Datenübertragung zwischen den Fahrzeugen im GHz-Bereich erfolgt.

14. Gerät nach Anspruch 13, dadurch **gekennzeichnet,** daß eine Relaisstation vorgesehen ist.

## Claims

1. A protective vehicle for use in the event of a disaster, particularly in nuclear plants, comprising a self-propelled running gear (6) having cross-country mobility, characterised by a chassis (4) designed for heavy loads and having a recess (8) for an interchangeable insert in the form of a protected container (10) for personnel (14) or in the form of a carrier (12) for an observation unit (27) and/or for an implement (26; 30).

2. A vehicle according to claim 1, characterised in that the container (10) for personnel (14) has an anti-radiation casing (16).

3. A vehicle according to claim 2, characterised in that the container (10) is formed with at least one anti-radiation window (20) for direct vision.

4. A vehicle according to claim 2 or 3, characterised in that a device (22) for indirect observation of the surroundings is provided in the container (10).

5. A vehicle according to any one of claims 2 to 4, characterised in that an infra-red observation device (22) is provided.

6. A vehicle according to any one of claims 1 to 5, characterised in that the chassis is an armoured hull (4) and the running gear is a track-laying running gear (8) of a tank.

7. A vehicle according to any one of claims 1 to 6, characterised in that the drive provided is an internal combustion engine with a connected generator for operating sub-systems, more particularly consumers or loads situated outside the vehicle.

8. A vehicle according to claim 1, characterised in that it is remote-controllable by wireless means, more particularly through the agency of another manned vehicle according to any one of claims 2 to 7, and in that the insert (12) is constructed solely as a carrier for an observation unit and/or implement (26, 27, 30) but not for personnel.

9. A vehicle according to claim 8, characterised in that the implement is a telescopic powered manipulator (26).

10. A vehicle according to claim 8, characterised in that the implement is a spraying or sprinkling unit (30).

11. A vehicle according to any one of claims 1 to 10, characterised in that it is constructed as a traction vehicle.

12. A vehicle according to any one of claims 1 to 11, characterised in that the insert (10; 12) is so mounted in the recess (8) as to be rotatable in azimuth after the style of a tank turret.

13. A device according to any one of claims 1 to 12, characterised in that the unmanned vehicle is controlled from the manned vehicle by means of a navigation system and in that data transmission between the vehicles is carried out in the GHz range.

14. A device according to claim 13, characterised in that a relay station is provided.

## Revendications

1. Véhicule pour protection en cas de catastrophes, notamment dans des installations nucléaires, comportant un mécanisme de déplacement (6) automoteur tous terrains, caractérisé par un châssis (4) conçu pour de lourdes charges et pourvu d'un évidement (8) de réception d'un élément rapporté amovible ayant la forme d'un conteneur protégé (10) pour du personnel (14) ou bien d'un support (12) pour un appareil d'observation (27) et/ou pour un appareil de travail (26 ; 30 ).

2. Véhicule selon la revendication 1, caractérisé en ce que le conteneur (10)pour du personnel (14) comporte une enceinte (16) de protection contre les rayons.

3. Véhicule selon la revendication 2, caractérisé en ce qu'il est prévu dans le conteneur (10) au moins une fenêtre (20), protégée contre les rayons, pour une vision directe.

4. Véhicule selon la revendication 2 ou 3, caractérisé en ce qu'il est prévu dans le conteneur (10) un dispositif (22) pour une observation indirecte de l'environnement.

5. Véhicule selon une des revendications 2 à 4, caractérisé en ce qu'il est prévu un dispositif (22) d'observation en infrarouge.

6. Véhicule selon une des revendications 1 à 5, caractérisé en ce que le châssis est un baquet (4) de char d'assaut et le mécanisme de déplacement est un mécanisme de déplacement à chenilles (6) d'un char d'assaut.

7. Véhicule selon une des revendications 1 à 6, caractérisé en ce qu'il est prévu comme entraînement un moteur à combustion interne auquel est reliée une génératrice pour l'actionnement de systèmes secondaires, notamment d'appareils utilisateurs situés à l'extérieur du véhicule.

8. Véhicule selon la revendication 1, caractérisé en ce qu'il peut être télécommandé sans fils, notamment par un autre véhicule à équipage conforme à une des revendications 2 à 7 et en ce que l'élément rapporté (12) est agencé exclusivement comme un support pour un appareil d'observation et/ou de travail (26, 27, 30 ) mais non cependant pour du personnel.

9. Véhicule selon la revendication 8, caractérisé en ce que l'appareil de travail est un robot manipulateur (26) à mouvement télescopique.

10. Véhicule selon la revendication 8, caractérisé en ce que l'appareil de travail est un groupe de pulvérisation ou d'arrosage (30).

11. Véhicule selon une des revendications 1 à 10, caractérisé en ce qu'il est agencé comme un véhicule tracteur.

12. Véhicule selon une des revendications 1 à 11, caractérisé en ce que l'élément rapporté (10 ; 12 ) est monté dans l'évidement (8) à la façon d'une tourelle de char d'assaut pouvant tourner en azimut.

13. Appareil selon une des revendications 1 à 12, caractérisé en ce que le véhicule sans équipage est commandé à partir d'un véhicule à équipage au moyen d'un système de navigation et en ce que la transmission des données entre les véhicules est effectuée dans le domaine des GHz.

14. Appareil selon la revendication 13, caractérisé en ce qu'il est prévu une station-relais.

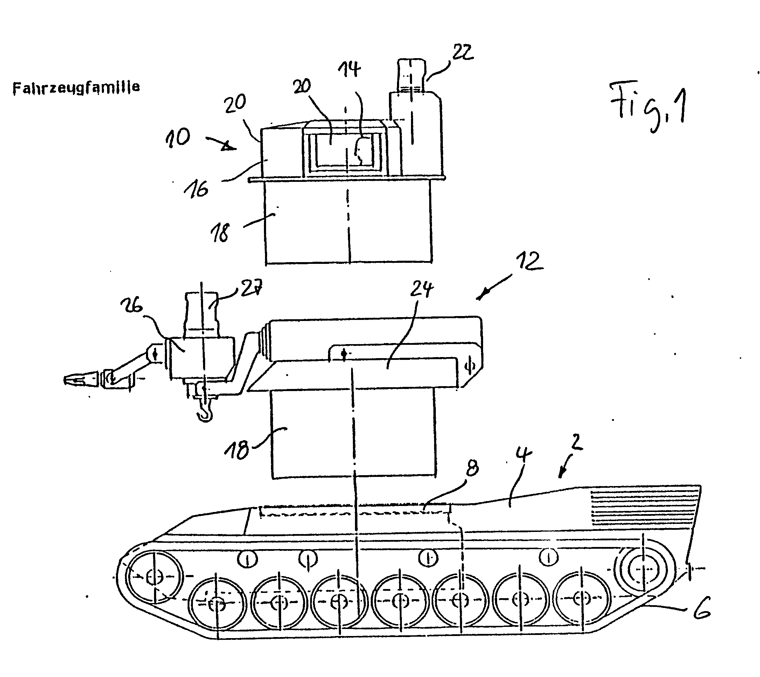

Fig.1

Fahrzeugfamilie

6

Fig. 2

Einsatzfahrzeug

Containergewicht (Bleihülle)

| Hüllendicke [cm] | Hüllenmasse [t] |
|---|---|
| 4 | 5 |
| 8 | 10 |
| 12 | 16 |
| 16 | 23 |
| 18 | 27 |

EP 0 248 322 B1

Kraftmanipulator

Grenzwerte

Teleskopkran von 10 t Gewicht, 11,5 bis 25 m lang

| Auskraglänge | Anhängelast |
|---|---|
| 3 m | 60 t |
| 15 m | 10 t |
| 22 m | 2 t |

Fig.3

EP 0 248 322 B1

Fig. 4

Spritz- bzw. Berieselungsaggregat

Transportfahrzeug

Fig.5